Europäisches Patentamt

European Patent Office

Office européen des brevets

(11) Veröffentlichungsnummer: **0 483 581 A2**

## EUROPÄISCHE PATENTANMELDUNG

(21) Anmeldenummer: **91117509.9**

(22) Anmeldetag: **14.10.91**

(51) Int. Cl.5: **F02B 27/02**

(30) Priorität: **30.10.90 DE 4034554**

(43) Veröffentlichungstag der Anmeldung:
**06.05.92 Patentblatt 92/19**

(84) Benannte Vertragsstaaten:
**DE ES FR GB IT**

(71) Anmelder: **WOCO Franz-Josef Wolf & Co.**
**Sprudelallee 19**
**W-6483 Bad Soden-Salmünster(DE)**

(72) Erfinder: **Wolf, Franz-Josef**
**Sprudelallee 19**
**W-6483 Bad Soden-Salmünster(DE)**
Erfinder: **Pletsch, Hubert**
**Am Ouellenrain 13**
**W-6483 Bad Soden-Salmünster(DE)**

(74) Vertreter: **Jaeger, Klaus, Dr. et al**
**Patentanwälte JAEGER, LORENZ & KÖSTER**
**Pippinplatz 4a**
**W-8035 München-Gauting(DE)**

(54) **Ansaugrohr.**

(57) Das insbesondere aus Kunststoff bestehende Ansaugrohr für einen Verbrennungsmotor, insbesondere für einen Kraftfahrzeugmotor, ist durch einen in seiner Fläche variablen Querschnitt gekennzeichnet. Die Änderung der Querschnittsfläche zumindest eines Abschnitts des Ansaugrohres ist unter Führung durch Kenndaten des Motorbetriebszustandes, insbesondere Drehzahl und Taktfrequenz geregelt.

EP 0 483 581 A2

Die Erfindung betrifft ein Ansaugrohr für einen Verbrennungsmotor, insbesondere Ottomotor, und betrifft speziell ein Ansaugrohr für einen Kraftfahrzeugmotor.

Bekanntlich ist der Liefergrad eine wesentliche Kenngröße, die den Wirkungsgrad eines Verbrennungsmotors bestimmt. Dabei ist der Liefergrad das Verhältnis der nach Abschluß des Ladungswechsels im Verbrennungsraum des Motors befindlichen Masse an Frischgas zur theoretisch möglichen Masse. Dabei wird der tatsächlich messbare Liefergrad wesentlich durch die Drosselverluste und die Spülverluste beeinflußt. Der Drosselverlust ist dabei die Summe der Strömungswiderstände, die sowohl im Ansaugsystem, primär also im Ansaugrohr des Motors, und am Ventil entstehen, während der Spülverlust das Druckverhältnis des Drucks der Frischgase vor Einlaßventil zum Abgasgegendruck ist, wobei dieser Spülverlust durch Ventilüberschneidungen wirksam werden kann. Während bei geringen Motordrehzahlen die Spülverluste überwiegen, nehmen die Drosselverluste mit zunehmender Drehzahl so rasch zu, daß sie im Bereich hoher Motordrehzahlen den Liefergrad überwiegend beeinflussen. Dieses Wechselspiel führt dazu, daß der Liefergrad als Funktion der Drehzahl im Bereich mittlerer Drehzahlen des Motors ein Maximum durchläuft.

Es ist bekannt, den Abfall des Liefergrades bei niedrigen und bei hohen Drehzahlen durch Vorverdichten der gesamten Ladung, zumindest jedoch eines Teils der Ladung abzuflachen. Zu diesem Zweck sind zahlreiche Aufladeverfahren bekannt, die zunächst grob danach unterteilt werden können, ob sie mit oder ohne zusätzlichem Verdichter arbeiten. Vorteil der mit den verschiedensten Verdichtern arbeitenden Aufladeverfahren sind die dabei erzielbaren und oft beeindruckenden Wirkungsgrade, die jedoch mit dem Nachteil eines recht erheblichen wirtschaftlichen und technischen Aufwandes für die Verdichter erkauft werden müssen. Demgegenüber weisen die ohne Verdichter arbeitenden Aufladeverfahren zwar den Vorteil mechanisch einfacher und kostengünstiger Lösungen auf, dies jedoch auf Kosten des Nachteils geringer Wirkungsgrade. So lassen sich insbesondere durch Ausnutzung der drehzahlabhängigen Ansaugrohrschwingungen zum Zwecke der sogenannten Resonanzaufladung nur mäßige Wirkungsgrade erreichen, in aller Regel Wirkungsgrade, die im Bereich von kleiner als 1,3 liegen.

Dieser geringe Wirkungsgrad der Resonanzaufladung ist dabei wiederum darauf zurückzuführen, daß der dynamische Zustand der Luftsäule im Ansaugrohr eine Funktion der Drehzahl des Motors ist. Die bislang bekannten Konfigurationen von Ansaugrohren für die Motoren von Gebrauchsfahrzeugen sind daher so ausgelegt, daß sie an einer Optimierung im mittleren Drehzahlbereich orientiert sind und bei niedriger Drehzahl Drehmomentverluste sowie bei hoher Drehzahl Leistungsverluste hinnehmen müssen. Dabei sind diese Randbereichsverluste sowohl auf die eingangs geschilderte Drehzahlabhängigkeit des Liefergrades als auch auf die überlagernde Drehzahlabhängigkeit der Schwingungen der Luftsäule im Ansaugrohr, d.h. auf die Drehzahlabhängigkeit des Wirkungsgrades der Resonanzaufladung, zurückzuführen.

Ausgehend von diesem Stand der Technik liegt der Erfindung die Aufgabe zugrunde, ein Ansaugrohr für einen Verbrennungsmotor, insbesondere für einen Ottomotor, speziell für die Verwendung in Gebrauchskraftfahrzeugen, zu schaffen, dessen Konfiguration gleichzeitig nach den prinzipiell einander widersprechenden Optimierungskriterien optimiert ist, die für den Betrieb des Motors bei niedrigen Drehzahlen und für den Betrieb des Motors bei hohen Drehzahlen anzuwenden sind.

Zur Lösung dieser Aufgabe schafft die Erfindung ein Ansaugrohr für einen Verbrennungsmotor, insbesondere für einen Kraftfahrzeugmotor, dessen Querschnitt nach dem kennzeichnenden Teil des Patentanspruchs 1 zumindest in einem Bereich oder Abschnitt des Ansaugrohres veränderbar ist, genauer gesagt willkürlich steuerbar sowie beliebig regelbar veränderbar ist.

Die Steuerung der Änderung des Flächeninhalts des Querschnitts des Ansaugrohres bzw. zumindest eines Abschnittes des Ansaugrohres erfolgt dabei vorzugsweise zeitgleich dem jeweils aktuellen Betriebszustand des Motors, so daß also die Querschnittsfläche zu jeder Zeit eine Funktion, d.h. eine "Realzeit-Funktion" des aktuellen Motorbetriebszustandes ist.

Unter dem Begriff "Motorbetriebszustand" sind dabei im Sinne der vorliegenden Erfindung ausdrücklich sowohl einzeln als auch einander überlagernd einerseits drehzahlabhängige Betriebszustände als auch andererseits taktabhängige Motorbetriebszustände bzw. Zustände des gesamten aus Ansaugkanal, Motor und Abgaskanal bestehenden dynamischen Systems zu verstehen.

Die Steuerung der Größe der Querschnittfläche des Ansaugrohres kann dabei sowohl unter unmittelbarer mechanischer oder elektronischer Zwangssteuerung durch den Motor selbst als auch durch eine solche mittelbare oder unmittelbare Zwangssteuerung, insbesondere mechanische oder elektronische Zwangssteuerung, erfolgen, die von Elementen oder Baugruppen abgeleitet wird, die ihrerseits dem Motor entweder vorgeschaltet oder nachgeschaltet sind. In diesem Sinne kann beispielsweise die Motordrehzahl unmittelbar am Motor selbst abgegriffen und zur direkt proportionalen Beaufschlagung eines Stellelementes oder Stellgliedes verwendet werden, das seinerseits mittelbar oder unmittelbar auf das Ansaugrohr im Sinne einer direkt proportionalen Vergrößerung oder Verkleinerung der Querschnittfläche des Ansaugrohres, zumindest eines funktionsrelevanten Abschnittes des Ansaugrohres, einwirkt.

Gleicherweise können nach einer Ausgestaltung der Erfindung zusätzlich oder alternativ die Stellung der Drosselklappe und/oder des Gaspedals oder eines Gashebels oder des Bowdenzugs, der solche Betätigungsglieder mit der Drosselklappe verbindet, mechanisch abgegriffen und die abgegriffenen Stellkräfte unmittelbar mechanisch zur Querschnittsveränderung des Ansaugrohres, beispielsweise über einen angekoppelten Bowdenzug, verwendet werden. Statt dieser rein mechanischen Abtastung und Stellkrafterzeugung können selbstverständlich auch elektronische und/oder elektrische Sensoren oder Stellelemente benutzt werden. Gleicherweise können Druck- und/oder Temperaturschwingungen oder -schwankungen im Abgassystem als Führungsgrößen für die Regelung der Querschnittfläche des Ansaugrohres dienen. Dabei gehören die Auswahl der entsprechenden Sensoren und Stellglieder zum Fachwissen des Konstrukteurs. Weiterhin kann nach einer Ausgestaltung der Erfindung vorteilhaft auch die Druckschwankung im Ansaugrohr selbst als Führungsgröße und gleichzeitig als Stellkraft für eine Änderung der Querschnittsfläche des Ansaugrohres auch unter Führung durch die aktuellen Parameter des Motorbetriebszustandes dienen. Zu diesem Zweck ist zumindest ein Teil der Wand des Ansaugrohres als reversibel verformbare, insbesondere elastisch verformbare Membran ausgebildet. Bei einem Überdruck im Ansaugrohr weitet sich die Membran auf und vergrößert so den Querschnitt des Ansaugrohres auf der von ihr überdeckten axialen Länge des Ansaugrohrabschnitts, während sich bei Unterdruck in dem durch die elastische Membran überdeckten Ansaugrohrabschnitt durch die Verformbarkeit der Membran eine Querschnittsverringerung einstellt. Vorteilhaft läßt sich dabei diese "atmende" Bewegung der den Querschnitt eines Ansaugrohrabschnittes regelnden Membran durch eine pneumatische Verbindung der dem Ansaugrohr inneren gegenüberliegenden Außenseite der Membran zum Abgassystem verstärken. Bei entsprechender Abstimmung kann so durch die Bidruckbeaufschlagung, beispielsweise also durch die kombinierte Unterdruckbeaufschlagung aus dem Ansaugrohr bei gleichzeitiger Überdruckbeaufschlagung aus dem Abgassystem, eine verstärkte Resonanzaufladung erzielt werden.

Eine weitere Verstärkung der Resonanzaufladung sowie eine weitere Verbesserung des Wirkungsgrades der Resonanzaufladung läßt sich sowohl bei Bidruckbeaufschlagung als auch bei einseitiger Beaufschlagung der Membran dadurch erreichen, daß mehr als nur eine solcher Membranbereiche im Ansaugrohr vorgesehen und so angeordnet sind, daß sie bei entsprechender Anordnung über weite Frequenzbereiche resonanzaktivierbar sind.

Während die vorstehend beschriebene "Atemfunktion" des Ansaugrohres zumindest auch und wesentlich eine Funktion der Taktfrequenz des Motors ist, die Änderung des Querschnitts des Ansaugrohres also nach Maßgabe des Motortakts erfolgt, kann die Änderung des Querschnitts des Ansaugkanals sowohl additiv als auch alternativ in der oben bereits prinzipiell beschriebenen Weise auch rein drehzahlabhängig, also unabhängig vom Motortakt, erfolgen. Dabei wird im Bereich niedriger Drehzahlen zur Drehmomenterhöhung der Querschnitt zumindest eines Abschnittes des Ansaugrohres über die Taktfrequenz hinweg verkleinert, um dadurch die Strömungsgeschwindigkeit und damit den Impuls der Luftsäule im Ansaugrohr und damit das Drehmoment des Motors zu erhöhen. Durch eine entsprechende Vergrößerung des Querschnitts des Ansaugrohres mit größer werdender Drehzahl kann dem Motor andererseits durch eine Verringerung der Drosselverluste mehr Luft zugeführt, also der Liefergrad verbessert und damit die Leistung des Motors erhöht werden.

Bei dieser drehzahlabhängigen Optimierung der Ansaugrohrkenndaten durch drehzahlabhängige Änderung des Querschnitts des Ansaugrohres ist das Ansaugrohr über einen zumindest effektiven Abschnitt seiner axialen Erstreckung vorzugsweise aus Kunststoff hergestellt. In dem formsteifen Kunststoffmantel sind gelenkig-reversibel faltbar ausgebildete Bereiche, vorzugsweise über Filmscharniere, angelegt. So kann die Faltbarkeit eines solchen Ansaugrohrabschnitts je Falte mit drei axial parallel zueinander verlaufenden, zur Rohrachse achsparallelen Filmscharnieren erzielt werden. Der Rohrabschnitt kann sowohl lediglich eine solcher Falten, aber auch mehrere, beispielsweise zwei, drei oder vier solcher Falten aufweisen.

Zur Steuerung dieser Faltung kann beispielsweise die Drehzahl der Nockenwelle des Motors durch einen elektrischen Drehzahlsensor unmittelbar abgetastet werden. Das Sensorsignal wird dann zu einem verwertbaren Stellsignal umgesetzt und auf einen elektrischen oder beispielsweisen pneumatischen Stellantrieb gegeben, der am oder im Bereich des mittleren der drei zu einer Falte gehörenden Faltlinien oder Faltscharniere, hier Filmscharniere, angreift, um dieses Mittelscharnier von einer dem kleinsten Ansaugrohrquerschnitt entsprechenden Stellung in größtem Abstand von der Verbindungslinie zwischen den beiden außenliegenden Scharnieren über beliebige Zwischenstellungen reversibel in eine dem größten Ansaugrohrquerschnitt entsprechende Lage zu verstellen, in der das mittlere der drei zu einer Falte gehörenden Scharniere auf der die beiden Außenscharniere miteinander verbindenden Linie liegt. Dabei sind Stellglieder dieser Art ebenso wie die Sensoren in unübersehbar großer Vielzahl am Markt erhältlich, so daß sich eine weitere Detailbeschreibung an dieser Stelle erübrigt.

Statt der querschnittsverändernden präformierten Faltung des Ansaugrohres kann selbstverständlich auch mit einer nicht präformierten Faltung das Prinzip der Erfindung verwirklicht werden, beispielsweise bei Verwendung vergleichsweise leicht verformbarer, sich axial erstreckender Schlauchabschnitte, die, bei partiell umfassenden Halterungselementen unter radialer Stauchung spontan einfalten. Alternativ kann bei einer solchen Ausgestaltung auch eine Wandwellung mit insbesondere axialer Erstreckung präformiert sein, so daß also der Ansaugrohrabschnitt im entspannten Zustand den kleinsten Querschnitt aufweist und die membranartige Wand unter Stauchung beispielsweise auf einen Kreisquerschnitt nach außen aufspringt.

Die Erfindung ist im folgenden anhand von Ausführungsbeispielen in Verbindung mit den Zeichnungen näher erläutert. Es zeigen:

Fig. 1     in schematischer Darstellung ein erstes Ausführungsbeispiel der Erfindung;

Fig. 2     in schematischer Darstellung das in Fig. 1 gezeigte Ausführungsbeispiel bei größtem Ansaugrohrquerschnitt;

Fig. 3     eine Variante des in den Figuren 1 und 2 gezeigten Ausführungsbeispiels; und

Fig. 4     ebenfalls in schematischer Darstellung ein weiteres Ausführungsbeispiel der Erfindung.

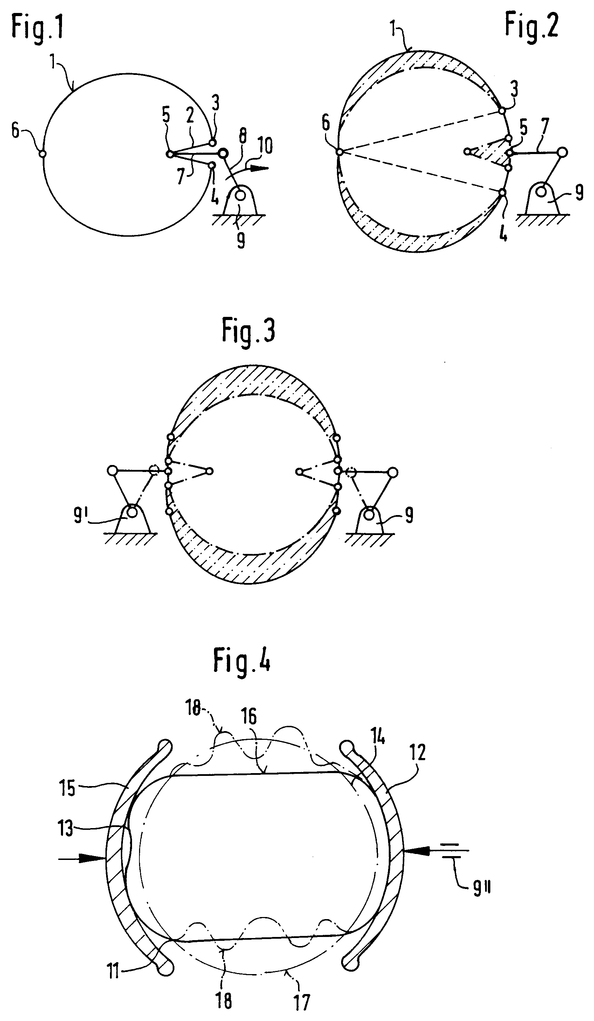

In der Fig. 1 ist in schematischer Darstellung ein radialer Schnitt durch ein Ansaugrohr gemäß der Erfindung gezeigt. Das Ansaugrohr 1 besteht aus formsteifem Kunststoff und weist im Bereich einer axialen Faltung 2 drei Filmscharniere 3,4,5 auf. Dem mittleren Filmscharnier 5 diametral gegenüber liegt ein viertes Filmscharnier 6. Bei entsprechender Materialwahl für die Wandung des Ansaugrohres 1 kann dieses vierte Filmscharnier 6 aufgrund ausreichender Wandelastizität häufig auch entfallen.

An dem zwischen den beiden äußeren Filmscharnieren 3,4 gelegenen inneren Filmscharnier 5 greift eine Koppelstange 7 an, die ihrerseits an einer Stellstange 8 eines schematisch dargestellten Stellantriebs 9 angelenkt ist. Die Winkelstellung der Stellstange 8 ist eine direkte reversible Funktion der Motordrehzahl. Die Motordrehzahl wird in einer in den Figuren nicht näher dargestellten und an sich bekannten und üblichen Weise durch einen elektronischen Sensor an der Nockenwelle des Motors abgetastet und als elektrisches Stellsignal auf den elektrisch angetriebenen Stellantrieb 9 übertragen.

In der in Fig. 1 gezeigten Stellung der Stellglieder weist das Ansaugrohr 1 zumindest im wesentlichen seinen kleinsten Querschnitt auf. Bei einem verschwenkenden Verstellen des Stellarms 8 des Stellgliedes 9 in Richtung des Pfeils 10 wird durch ein Aufziehen der Falte 2 der Querschnitt des Ansaugrohres vergrößert. Die Querschnittvergrößerung nimmt dabei so lange zu, bis das Scharnier 5 auf der Verbindungslinie zwischen den Scharnieren 3 und 4 liegt (Fig. 2). In dieser Endstellung ist der Querschnitt des Ansaugrohres in der aus Fig. 2 ersichtlichen Weise zumindest im wesentlichen um die schraffiert gezeichneten Flächen vergrößert worden.

In der Fig. 3 ist ein modifiziertes Ausführungsbeispiel der in den Figuren 1 und 2 gezeigten Ausbildung der Erfindung dargestellt, bei dem statt eines Stellantriebs 9 zwei einander gegenüberliegende Stellantriebe 9,9' vorgesehen sind.

In der Fig. 4 ist ein weiteres Ausführungsbeispiel der Erfindung in schematischer und nicht maßstäblicher Darstellung gezeigt. Im Gegensatz zu den in den Figuren 1 bis 3 gezeigten Ausführungsbeispielen, bei denen die Wand des Saugrohrs 1 aus einem formsteifen Werkstoff besteht, besteht die Wand 11 des in Fig. 4 gezeigten Ansaugrohres aus einem vergleichsweise weichen und leicht verformbaren Gummi. Auf zwei einander diametral gegenüberliegenden Zylinderflächensegmenten 12,13 ist die Rohrwand fest mit einem formsteifen Zylinderschalenelement 14,15 verbunden. Über einen Antrieb 9'' sind die beiden Zylinderschalenelemente 14,15 translatorisch gegeneinander verschiebbar, und zwar wiederum unter Steuerung durch die Motordrehzahl. Bei größter Entfernung der beiden Zylinderschalen voneinander weist das elastische Saugrohr im dargestellten Bereich einen oval abgerundeten fast rechteckigen Querschnitt auf, der bei maximaler Annäherung der beiden Zylinderschalenelemente 14,15 zu einer im Querschnitt kreisförmigen Konfiguration 17 des Ansaugrohres verformbar ist. Auf diese Weise lassen sich zwischen dem größten Flächeninhalt des Ansaugrohrquerschnitts bei kreisförmiger Konfiguration und der kleinsten Querschnittfläche des Ansaugrohres bei rechteckig gezogenem Querschnitt immerhin Querschnittsveränderungen in der Größenordnung von 10 bis 20 % erzielen. Dabei kann in der durch die Profildarstellung 18 gezeigten Weise durch eine axiale Profilierung der elastischen Wand des Ansaugrohres ein Membraneffekt erzielt werden, der in der Fig. 4 entnehmbaren Weise auch bei Querschnittsverformung der Ansaugrohrwand 11 erhalten bleibt und einer motortaktabhängigen Verstärkung der Resonanzaufladung dient.

Der Fachmann erkennt ohne weiteres, daß eine solche Membran selbstverständlich auch in Verbindung mit im übrigen formsteifen Ansaugrohrwänden der in den Figuren 1 bis 3 gezeigten Art einsetzen läßt.

## Patentansprüche

1. Ansaugrohr für einen Verbrennungsmotor, insbesondere für einen Kraftfahrzeugmotor,
   dadurch **gekennzeichnet**,
   dass die Querschnittfläche des Ansaugrohres (1;11) in zumindest einem Abschnitt des Ansaugrohres veränderbar ist.

2. Ansaugrohr nach Anspruch 1,
   dadurch **gekennzeichnet**,
   dass die Querschnittfläche zumindest eines Abschnitts des Ansaugrohres eine Realzeit-Funktion des aktuellen Motorbetriebszustandes ist.

3. Ansaugrohr nach einem der Ansprüche 1 oder 2,
   dadurch **gekennzeichnet**,
   dass die Änderung des Querschnittes des Ansaugrohres zumindest auch unter einer vom Motor geführten und bewirkten Zwangssteuerung erfolgt.

4. Ansaugrohr nach einem der Ansprüche 1 bis 3,
   dadurch **gekennzeichnet**,
   dass die Änderung des Querschnittes des Ansaugrohres zumindest auch durch eine von der Stellung der Drosselklappe, der Stellelemente der Drosselklappe oder diesen Gliedern entsprechender Glieder zur Motorsteuerung geführte und bewirkte Zwangssteuerung erfolgt.

5. Ansaugrohr nach einem der Ansprüche 1 bis 4,
   dadurch **gekennzeichnet**,
   dass die Änderung des Querschnittes des Ansaugrohres zumindest auch unter einer von den jeweils aktuellen Betriebszustandsgrössen des Motorabgassystems geführten und bewirkten Zwangssteuerung erfolgt.

6. Ansaugrohr nach einem der Ansprüche 1 bis 5,
   dadurch **gekennzeichnet**,
   dass die Änderung des Querschnittes des Ansaugrohres zumindest auch unter einer von den jeweils aktuellen Betriebszustandsgrössen des Motoransaugsystems geführten und bewirkten Zwangssteuerung erfolgt.

7. Ansaugrohr nach Anspruch 3,
   **gekennzeichnet** durch
   ein Stellglied (9;9';9''), das eine der Änderung der Motordrehzahl direkt proportionale Änderung des Querschnittes des Ansaugrohres bewirkt.

8. Ansaugrohr nach Anspruch 4,
   **gekennzeichnet** durch
   ein Stellglied (9;9';9''), das eine der Änderung der Stellung eines Gaspedals oder eines Gashebels direkt proportionale Änderung des Querschnittes des Ansaugrohres bewirkt.

9. Ansaugrohr nach Anspruch 5,
   **gekennzeichnet** durch
   ein Stellglied (9;9';9''), das eine der Änderung des Drucks oder der Temperatur in der Abgasleitung direkt proportionale Änderung des Querschnittes des Ansaugrohres bewirkt.

10. Ansaugrohr nach Anspruch 6,
    **gekennzeichnet** durch
    ein Stellglied (9;9';9''), das eine der Änderung des Drucks im Ansaugrohr direkt proportionale Änderung des Querschnittes des Ansaugrohres bewirkt.

11. Ansaugrohr nach einem der Ansprüche 1 bis 10,
    dadurch **gekennzeichnet**,
    dass zumindest ein Teil der Wand des Ansaugrohres als reversibel verformbare, insbesondere elastisch verformbare Membran (16,17; 18) ausgebildet ist.

12. Ansaugrohr nach Anspruch 11,
    dadurch **gekennzeichnet**,
    dass die verformbare Membran (18) als Feder-Masse-System auf eine Resonanzfrequenz oder einen Resonanzfrequenzbereich zu den Schwingungen der Luftsäule im Ansaugrohr abgestimmt ist.

13. Ansaugrohr nach einem der Ansprüche 1 bis 12,
    **gekennzeichnet** durch
    zumindest einen gelenkig-reversibel faltbar ausgebildeten Bereich (2) eines ansonsten radial und axial formsteifen Wandabschnitts (1) des Ansaugrohres.

14. Ansaugrohr nach Anspruch 13,
    **gekennzeichnet** durch
    eine Ausgestaltung des Ansaugrohres als Kunststoffrohr (1) mit mindestens drei in der Rohrwand ausgebildeten Filmscharnieren (3,4,5), wobei das Stellglied (7,8,9) an dem oder im Bereich des mittleren (5) der drei Filmscharniere angreift.

Fig.1

Fig.2

Fig.3

Fig.4